# EUROPEAN PATENT APPLICATION

(11) **EP 4 280 611 A1**
(43) Date of publication of application: **22.11.2023**
(21) Application number: 22173886.7
(22) Date of filing: 17.05.2022
(51) Int. Cl.: H04N 21/442, H04N 21/81, H04W 28/02, H04W 36/30

(54) **XR STREAMING METHOD AND XR STREAMING SYSTEM**

(71) Applicant: Holo-Light GmbH, 6020 Innsbruck (AT)
(72) Inventor: Werlberger, Alexander, 6020 Innsbruck (AT); Landgraf, Philipp, 6020 Innsbruck (AT)
(74) Representative: Prinz & Partner mbB

(57) **Abstract**

An extended reality (XR) streaming method for streaming XR images between a plurality of XR application instances (26) and an XR device (12) is described. The XR streaming method comprises the following steps:
- streaming, by means of a first XR application instance of the plurality of XR application instances (26), XR images to the XR device (12), wherein the XR images are associated with an XR application;
- establishing a communication connection between a second XR application instance of the plurality of XR application instances and the XR device (12), wherein the second XR application instance is currently inactive;
- streaming, by means of the second XR application instance, XR images to the XR device (12); and
- terminating a communication connection between the XR device (12) and the first XR application instance after the communication connection between the second XR application instance and the XR device (12) has been established.

Further, an XR streaming system (10) is described.

## Description

The present invention generally relates to an extended reality (XR) streaming method for streaming XR images between a plurality of XR application instances and an XR device. The present invention further relates to an XR streaming system.

In certain XR applications, XR images to be displayed on an XR device of a user are streamed from an XR application instance that is implemented in an external computer device to the XR device.

In certain situations, for example if the user leaves an area that is associated with the external computer device, the user may have to switch from the original XR application instance streaming the XR images to another XR application instance running on a different external computer device, which may result in interruptions in the displayed image stream.

Further, loading times usually occur if a user wants to switch between different XR applications that are running on different XR application instances.

Thus, the object of the present invention is to provide an XR streaming method and system that allow for a seamless transition between XR application instances.

According to the invention, the problem is solved by a an extended reality (XR) streaming method for streaming XR images between a plurality of XR application instances and an XR device. The XR streaming method comprises the following steps:
- streaming, by means of a first XR application instance of the plurality of XR application instances, XR images to the XR device, wherein the XR images are associated with an XR application;
- establishing a communication connection between a second XR application instance of the plurality of XR application instances and the XR device, wherein the second XR application instance is currently inactive;
- streaming, by means of the second XR application instance, XR images to the XR device; and
- terminating a communication connection between the XR device and the first XR application instance after the communication connection between the second XR application instance and the XR device has been established.

Therein and in the following, the term "XR device" is understood to denote an electronic device that is configured to display an extended reality (XR) image, i.e. an augmented reality (AR) image, a mixed reality (MR) image, and/or a virtual reality (VR) image.

For example, the XR device may be a head-mounted display, e.g. an electronic wearable having the shape of glasses. However, it is to be understood that the XR device may be established as any other XR-capable electronic device, e.g. as a smartphone or as a tablet.

Moreover, the term "XR image" is understood to denote at least one virtual image.

In the case of augmented reality or mixed reality, the XR image corresponds to at least one virtual image that is superimposed over reality.

For example, the XR device may be a head-mounted display with a semi-transparent display, wherein the virtual image is displayed on the semi-transparent display, such that the user can directly see the environment through the semi-transparent display, but with the virtual image superimposed.

As another example, the XR device may be a head-mounted display that is optically opaque. In this case, the head-mounted display may comprise at least one internal camera, particularly several internal cameras being configured to capture images of the environment of the head-mounted display. The real images captured by means of the internal camera are superimposed with the virtual image(s), and the resulting superposition of the real image(s) and the augmented reality image(s) is displayed on a display of the head-mounted display.

As another example, the XR device may be a smartphone or a tablet, wherein an image captured by means of a camera of the XR device is superimposed with the at least one virtual image, and the resulting image is displayed on a display of the XR device.

In the case of virtual reality, the XR image corresponds to a virtual image being displayed on a display of the XR device.

For example, the XR device may be a head-mounted display that is optically opaque. The VR images may be displayed on a display of the head-mounted display.

Further, the term "XR application instance" is understood to denote suitable hardware, suitable software, or a combination of hardware and software that is configured to execute a certain XR application.

For example, the XR application may be an engineering application that is configured to generate XR images associated with a 3D model of an object, e.g. of a car, of an engine, or of any other object.

In a particular example, a car may be recognized in the at least one image captured by means of the at least one camera, and may be superimposed with a 3D model of the car.

However, it is to be understood that the XR application may be any other type of augmented reality, mixed reality, or virtual reality application, e.g. a game or a metaverse application such as a social hub that may have different accessible areas.

Further, the term "currently inactive" used above is understood to denote that the second XR application instance does currently not stream XR images to the XR device. In fact, the second XR application instance may not be connected with the XR device until the communication connection is established. Thus, the second XR application instance is inactive with respect to the XR device.

However, the second XR application instance may be connected with another XR device and may stream XR images to that XR device. In other words, the term "currently inactive" does not mean that the second XR application instance is completely inactive, but inactive with respect to the XR device.

The XR streaming method according to the present disclosure is based on the idea to establish a communication connection between the second XR application instance and the XR device while the first XR application instance is still streaming to the XR device.

Accordingly, the second XR application instance starts streaming to the XR device no later than when the communication connection between the XR device and the first XR application instance is terminated.

Preferably, the second XR application instance starts streaming to the XR device before the communication connection between the XR device and the first XR application instance is terminated.

Thus, it is ensured that a seamless transition between the XR images streamed by the first XR application instance and the XR images streamed by the second XR application instance is provided, i.e. a user of the XR device does not experience a notable loading time or delay between the two XR image streams.

According to an aspect of the present invention, an instance switch command is generated by means of the XR device or by means of the first XR application instance, wherein the communication connection between the second XR application instance and the XR device is established based on the instance switch command. In other words, the XR device and/or the first XR application instance may initiate the transition from the first XR application instance to the second XR application instance.

For example, the first XR application instance may generate the instance switch command and may transmit the instance switch command to the XR device. Based on the instance switch command, the XR device may attempt to connect with the second XR application instance, such that the communication connection with the second XR application instance is established.

Alternatively or additionally, the XR device or rather a predetermined subsystem of the XR device may generate the instance switch command. Based on the instance switch command, the XR device may attempt to connect with the second XR application instance, such that the communication connection with the second XR application instance is established.

Particularly, a user of the XR device may initiate the instance switch command via a user interface of the XR device.

According to another aspect of the present invention, the instance switch command is generated based on a respective distance between the XR device and the plurality of XR application instances, based on a respective transmission delay between the XR device and the plurality of XR application instances, and/or based on a respective data transmission rate between the XR device and the plurality of XR application instances. In other words, the XR device and/or the first XR application instance may be configured to monitor and evaluate at least one quality measure that indicates the quality of the connection between the XR device and the XR application instances, namely the distance, transmission delay, and/or data transmission rate. Thus, it is ensured that the XR application instance providing the best communication connection is selected for streaming the XR images.

The transmission delay may relate to a round trip time between the XR device and the respective XR application instance, or between the respective XR application instance and the XR device. For example, the round trip time may be measured using a ping signal.

For example, the instance switch command may be generated if the (spatial) distance between the XR device and the first XR application instance is greater than the (spatial) distance between the XR device and the second XR application instance by at least a predetermined amount.

Alternatively or additionally, the instance switch command may be generated if the transmission delay between the XR device and the first XR application instance is greater than the transmission delay between the XR device and the second XR application instance by at least a predetermined amount.

Alternatively or additionally, the instance switch command may be generated if the data transmission rate between the XR device and the first XR application instance is smaller than the data transmission rate between the XR device and the second XR application instance by at least a predetermined amount.

In an embodiment of the present invention, an instance switch invitation command is generated by means of a second XR device or by an XR application instance associated with the second XR device, wherein the instance switch invitation command is transmitted to the first XR application instance and/or to the XR device currently connected with the first XR application instance. In other words, a user of the second XR device may invite a user of the XR device to join a particular XR application instance by sending the instance switch invitation command.

A corresponding notification may be displayed on the XR device, and the user of the XR device may either accept or decline the invitation to join the XR application instance associated with the second XR device.

If the user accepts the invitation, a seamless transition from the first XR application instance to the XR application instance associated with the second XR device is initiated, as described above.

In a further embodiment of the present invention, the instance switch command is generated based on the instance switch invitation command. Thus, it is ensured that the XR device established a communication connection with the correct XR application instance, namely the XR application instance associated with the second XR device.

The XR images streamed by means of the second XR application instance may be associated with the XR application or with another XR application. Accordingly, the first XR application instance and the second XR application instance may be associated with the same XR application. Alternatively, the first XR application instance and the second XR application instance may be associated with different XR applications.

If the first XR application instance and the second XR application instance are associated with the same XR application, both the first XR application instance and the second XR application instance stream XR images associated with the same XR application to the XR device, as described above. Thus, a seamless transition between the XR application instances is provided within the same XR application.

For example, different XR application instances may be associated with different areas or zones of a real environment. If a user leaves an area associated with the first XR application instance, a switch to the second XR application instance associated with the new area or zone is initiated, as described above.

If the first XR application instance and the second XR application instance are associated with different XR applications, the first XR application instance streams XR images associated with a first XR application to the XR device, and the second XR application instance stream XR images associated with a second XR application to the XR device, as described above. Thus, a transition between the different XR applications is provided without a noticeable delay or loading time.

For example, the first XR application may be a social hub that gives access to plurality of different further XR applications. Within the first XR application, a user may select a further XR application to access. Once the user has selected an XR application, the XR application instance switch is initiated, as described above.

Thus, the user can seamlessly switch between different XR applications.

According to an aspect of the present invention, the plurality of XR application instances is implemented on a single server and/or on different servers. The different servers may be interconnected with each other, e.g. via a wide area network (WAN) or via the internet.

Particularly, different XR application instances that are implemented on a single server may be associated with different XR applications.

Different XR application instances that are implemented on different servers may be associated with the same XR application or with different XR applications.

In an embodiment of the present invention, the streaming of the XR images by means of the first XR application instance and the streaming of the XR images by means of the second XR application instance overlap in time. In other words, the first XR application instance continues streaming the XR images to the XR device until after the second XR application instance has begun streaming the XR images to the XR device.

Thus, it is ensured that a seamless transition between the XR images streamed by the first XR application instance and the XR images streamed by the second XR application instance is provided, i.e. a user of the XR device does not experience a notable loading time or delay between the two streams, as the XR device receives both streams in parallel for at least a certain time period in which the streams overlap.

According to another aspect of the present invention, metadata is transmitted from the first XR application instance to the second XR application instance, wherein the metadata comprises additional information about a current state of the XR application.

For example, if the first XR application instance and the second XR application instance correspond to the same XR application, the metadata may ensure that the second application instance and the first application instance are synchronized, such that no discontinuities in the XR images streamed to the XR device occur.

Particularly, the metadata may comprise information about a currently streamed content and/or time stamps associated with the streamed XR images.

As another example, the metadata may comprise user information about the user of the XR device and/or about a user of another XR device. Accordingly, the metadata may ensure that the user information is correctly displayed on the XR device. Alternatively or additionally, the metadata may be used in order to initiate a private session, wherein predetermined users can enter the same XR application.

In a further embodiment of the present invention, the metadata is transmitted from the first XR application instance to the second XR application instance directly or via the XR device. For example, the metadata may be transmitted between different servers associated with the XR application instances via a wide area network or via the internet. As another example, the metadata may be transmitted from the first XR application instance over the XR device to the second XR application instance wirelessly, e.g. via WLAN, via 4G, or via 5G.

According to a further aspect of the present invention, the first XR application instance employs a first rendering engine, wherein the second XR application instance employs a second rendering engine, and wherein the first rendering engine is different from the second rendering engine. Thus, a seamless transition between different XR application instances using different rendering engines is provided without any noticeable loading time or delays.

For example, the first XR application instance may employ the "Unity" engine, while the second XR application instance may employ an "Unreal" engine.

Each XR application instance may be associated with at least one user, particularly with a plurality of users. In other words, a plurality of users may access the same XR application instance simultaneously. Each user, an arbitrary group of users or even all users may switch the XR application instance seamlessly.

According to the invention, the problem further is solved by an extended reality (XR) streaming system. The XR streaming system comprises a plurality of XR application instances, wherein the plurality of XR application instances is connectable with an XR device. The XR streaming system is configured to perform the XR streaming method described above.

Regarding the further advantages and properties of the XR streaming system, reference is made to the explanations given above with respect to the XR streaming method, which also hold for the XR streaming system and vice versa.

Particularly, the XR streaming system may comprise the XR device.

In an embodiment of the present invention, the XR streaming system comprises a plurality of servers, wherein the plurality of XR application instances is implemented on the plurality of servers.

Different XR application instances that are implemented on the same server may be associated with different XR applications.

Different XR application instances that are implemented on different servers may be associated with the same XR application or with different XR applications.

According to an aspect of the present invention, the plurality of servers is interconnected. For example, the different servers may be interconnected with each other, e.g. via a wide area network (WAN) or via the internet.

Particularly, the XR application or several different XR applications may be provided as a cloud-based service being executed on the plurality of servers, or more precisely on the plurality of XR application instances being executed on the plurality of servers.

The foregoing aspects and many of the attendant advantages of the claimed subject matter will become more readily appreciated as the same become better understood by reference to the following detailed description, when taken in conjunction with the accompanying drawings, wherein:
- Figure 1 schematically shows a block diagram of an XR streaming system according to the present invention;
- Figure 2 schematically shows an exemplary embodiment of the XR projection system of Figure 1;
- Figure 3 shows a flow chart of an XR streaming method according to the present invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

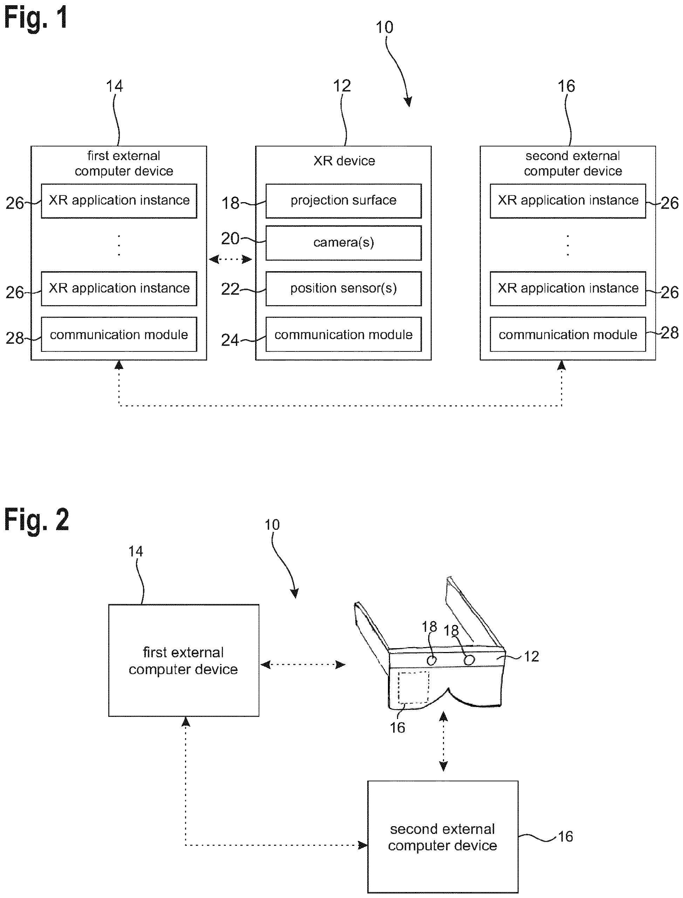

Figure 1 schematically shows a block diagram of an XR streaming system 10 comprising an XR device 12 and a first external computer device 14.

As is indicated by the dashed arrow, the first external computer device 14 is connected with the XR device 12 in a signal-transmitting manner.

The XR streaming system 10 further comprises a second external computer device 16. The second external computer device 16 is connectable to the XR device 12, but may currently not be connected with the XR device 12.

Therein and in the following, the terms "connectable", "connected", and "connected in a signal transmitting manner" are understood to denote a cable-based or wireless connection that is configured to transmit signals between the respective devices or components.

In general, the XR device 12 is an electronic device that is configured to display an extended reality (XR) image, i.e. an augmented reality (AR) image, a mixed reality (MR) image, and/or a virtual reality (VR) image.

As is illustrated in Figure 2, the XR device 12 may, for example, be configured as a head-mounted display, particularly as an electronic wearable having the shape of glasses.

However, it is to be understood that the XR device 12 may be established as any other XR-capable electronic device, e.g. as a smartphone or as a tablet.

In general, the XR streaming system 10 allows a user to observe and/or interact with virtual objects, particularly virtual 3D objects, that are streamed from at least one of the external computer devices 14, 16 to the XR device 12.

If the XR streaming system 10 is an AR streaming system or an MR streaming system, these virtual objects are embedded into a real environment of the user.

Accordingly, the XR device 12 comprises at least one projection surface 18, wherein an XR image to be displayed is projected onto the projection surface 18, such that the virtual object is displayed to the user.

The projection surface 18 may be a display of the XR device 12.

Optionally, the XR streaming system 10 may comprise at least one handheld input device (not shown in Figure 1), wherein the user may control the XR streaming system 10 by means of the at least one handheld input device.

For example, the at least one handheld input device may be established as a pen-shaped device, as a gamepad, or as any other type of suitable input device.

The XR device 12 further may comprise at least one camera 20, at least one position sensor 22, and/or a communication module 24.

Therein and in the following, the term "module" is understood to describe suitable hardware, suitable software, or a combination of hardware and software that is configured to have a certain functionality.

The hardware may, inter alia, comprise a CPU, a GPU, an FPGA, an ASIC, or other types of electronic circuitry.

The at least one camera 20 is configured to capture images of an environment of the XR device 12, particularly of an environment in front of the XR device 12.

Particularly, the at least one camera 20 may be established as a stereo camera. Alternatively or additionally, the XR device 12 may comprise several cameras with overlapping field of view. Thus, depth-information on images taken by the at least one camera 20 can be determined based on images taken by the at least one camera 20.

The at least one camera 20 may be operable in the visible light spectrum and/or in the infrared spectrum. For example, the XR device 12 may comprise at least one camera 20 being operable in the visible light spectrum, and at least one camera 20 being operable in the infrared spectrum.

The at least one position sensor 22 is configured to determine a position, i.e. a location and/or orientation of the XR device 12.

For example, the at least one position sensor 22 may be established as a gyroscope, as an acceleration sensor, as a magnetometer, as a GNSS device, and/or as any other suitable type of position sensor.

The XR device 12 may stream the determined position to the external computer devices 14, 16, such that an XR application running on the external computer devices 14,6 takes the determined position of the XR device 12 into account.

In general, the first external computer device 14 and the second external computer device 16 may each be established as any type of electronic computing device that is configured to have the functionality described below.

For example, the external computer devices 14, 16 may be established as a personal computer, as a laptop, as a notebook, as a MAC, as a tablet, as a smartphone, or as any other type of smart device, respectively.

Preferably, the external computer devices 14, 16 are established as a server, respectively.

Without restriction of generality, it is assumed in the following that the external computer devices 14, 16 are established as a server, respectively.

The external computer devices 14, 16 may be interconnected with each other, e.g. via a wide area network (WAN) or via the internet.

The external computer device 14, 16 each comprise a plurality of XR application instances 26, and a communication module 28.

Therein and in the following, the term "XR application instance" is understood to denote suitable hardware, suitable software, or a combination of hardware and software that is configured to execute a certain XR application.

For example, the XR application may be an engineering application that is configured to generate XR images associated with a 3D model of an object, e.g. of a car, of an engine, or of any other object.

In a particular example, a car may be recognized in the at least one image captured by means of the at least one camera of the XR device 12, and may be superimposed with a 3D model of the car.

However, it is to be understood that the XR application may be any other type of augmented reality, mixed reality, or virtual reality application, e.g. a game or a metaverse application, such as a social hub giving a plurality of users access to different XR applications.

In general the XR application instances 26 of the external computer devices 14, 16 may be associated with the same or with different XR applications.

Particularly, different XR application instances 26 that are implemented on a single server, i.e. on one of the external computer devices 14, 16, may be associated with different XR applications.

Different XR application instances that are implemented on different servers may be associated with the same XR application or with different XR applications.

The communication module 24 of the XR device 12 and the communication modules 24, 28 of the external computer devices 14, 16 are configured to communicate with each other.

In fact, image data, sensor data, position data and/or control data may be exchanged between the XR device 12 and the external computer devices 14, 16 by means of the communication modules 24, 28.

Therein, any suitable wireless or cable-based transmission technique may be used by the communication modules 24, 28, e.g. WLAN, 4G, 5G, Ethernet, etc.

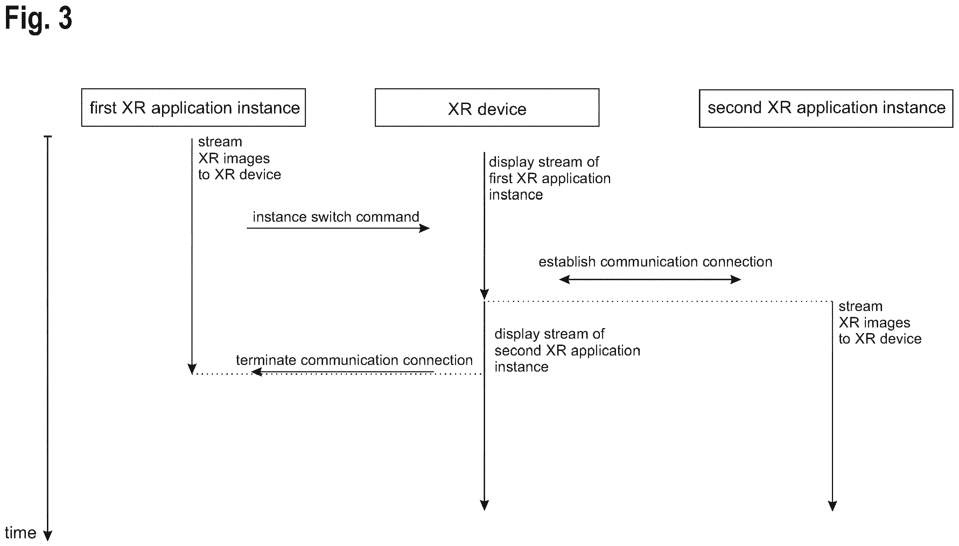

The XR streaming system 10 is configured to perform an XR streaming method for streaming XR images between the plurality of XR application instances 26 and the XR device 12, which his described in the following with reference to Figure 3.

XR images are streamed the XR device 12 by means of a first XR application instance of the plurality of XR application instances 26.

The XR images streamed to the XR device 12 are displayed on the projection surface 18 of the XR device 12.

In fact, the first XR application instance may be any one of the XR application instances 26 implemented on the first external computer device 14.

An instance switch command is generated by means of the XR device 12 or by means of the first XR application instance.

In general, the instance switch command corresponds to a signal that instructs the XR device 12 to connect with a second XR application instance of the plurality of XR application instances 26, wherein the second XR application is currently inactive, i.e. not streaming XR images to the XR device 12.

For example, the XR device 12 or any one of the plurality of XR application instances 26 may monitor a respective transmission delay between the XR device 12 and the plurality of XR application instances 26, a distance between the XR device 12 and the plurality of XR application instances 26, and/or a respective data transmission rate between the XR device 12 and the plurality of XR application instances 26.

The transmission delay may relate to a round trip time between the XR device 12 and the respective XR application instance 26, or between the respective XR application instance 26 and the XR device 12. For example, the round trip time may be measured using a ping signal.

The instance switch command may be generated based on at least one of these monitored parameters.

For example, the instance switch command may be generated if the distance between the XR device 12 and the first XR application instance is greater than the distance between the XR device 12 and the second XR application instance by at least a predetermined amount.

Alternatively or additionally, the instance switch command may be generated if the transmission delay between the XR device 12 and the first XR application instance is greater than the transmission delay between the XR device 12 and the second XR application instance by at least a predetermined amount.

Alternatively or additionally, the instance switch command may be generated if the data transmission rate between the XR device 12 and the first XR application instance is smaller than the data transmission rate between the XR device 12 and the second XR application instance by at least a predetermined amount.

Alternatively or additionally, the instance switch command may be generated based on an instance switch invitation command received from another user. The instance switch invitation command corresponds to an invitation of a user of another XR device to the user of the XR device 12 to join a particular XR application instance 26, namely the second XR application instance.

The instance switch invitation command may be generated by means of the second XR device or by an XR application instance 26 associated with the second XR device.

The instance switch invitation command is transmitted to the first XR application instance and/or to the XR device 12 currently connected with the first XR application instance.

A corresponding notification may be displayed on the XR device 12, and the user of the XR device 12 may either accept or decline the invitation to join the XR application instance 26 associated with the second XR device, i.e. the second XR application instance.

A communication connection is established between the XR device 12 and the second XR application instance based on the instance switch command.

Optionally, metadata may be transmitted from the first XR application instance to the second XR application instance directly or via the XR device 12, wherein the metadata comprises additional information about a current state of the XR application.

For example, if the first XR application instance and the second XR application instance correspond to the same XR application, the metadata may ensure that the second application instance and the first application instance are synchronized, such that no discontinuities in the XR images streamed to the XR device 12 occur.

Particularly, the metadata comprises information about a currently streamed content and/or time stamps associated with the streamed XR images.

As another example, the metadata may comprise user information about the user of the XR device 12 and/or about a user of another XR device. Accordingly, the metadata may ensure that the user information is correctly displayed on the XR device 12.

Alternatively or additionally, the metadata may be used in order to initiate a private session, wherein predetermined users can enter the same XR application.

After the communication connection is established, the second XR application instance starts streaming XR images to the XR device 12.

The XR images streamed to the XR device 12 by means of the second XR application instance are displayed on the projection surface 18 of the XR device 12.

Moreover, after the communication connection between the second XR application and the XR device 12 has been established, the communication connection between the XR device 12 and the first XR application instance is terminated, such that streaming of XR images from the first XR application instance to the XR device 12 is stopped .

Preferably, streaming of the XR images by means of the first XR application instance and streaming of the XR images by means of the second XR application instance overlap in time.

In other words, the first XR application stops streaming of the XR images only after the second XR application instance has begun streaming the XR images.

Thus, a seamless transition between the XR image streams provided by the first XR application instance and by the second XR application instance is obtained, such that no notable loading times or delays are present when switching between the two streams.

The first XR application instance and the second XR application instance may be associated with the same XR application or with different XR applications.

For example, the first XR application instance and the second XR application instance may be associated with different areas or zones of a real environment. If the user leaves an area associated with the first XR application instance, a switch to the second XR application instance associated with the new area or zone is initiated, as described above.

As another example, the first XR application may be a social hub in a metaverse that gives access to plurality of different XR applications. Within the first XR application, the user may select a further XR application to access. Once the user has selected an XR application, the XR application instance switch is initiated, as described above.

In fact, the first XR application instance may employ a first rendering engine, and the second XR application instance may employ a second rendering engine, wherein the first rendering engine is different from the second rendering engine.

For example, the first XR application instance may employ the "Unity" engine, while the second XR application instance may employ an "Unreal" engine. However, it is to be understood that any other rendering engine may be used.

Thus, a seamless transition between different XR application instances 26 using different rendering engines is provided without any noticeable loading time or delays.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. An extended reality (XR) streaming method for streaming XR images between a plurality of XR application instances (26) and an XR device (12), wherein the XR streaming method comprises the following steps,
- streaming, by means of a first XR application instance of the plurality of XR application instances (26), XR images to the XR device (12), wherein the XR images are associated with an XR application;
- establishing a communication connection between a second XR application instance of the plurality of XR application instances (26) and the XR device, wherein the second XR application instance is currently inactive;
- streaming, by means of the second XR application instance, XR images to the XR device (12); and
- terminating a communication connection between the XR device (12) and the first XR application instance after the communication connection between the second XR application instance and the XR device (12) has been established.

2. The XR streaming method of claim 1, wherein an instance switch command is generated by means of the XR device (12) or by means of the first XR application instance, wherein the communication connection between the second XR application instance and the XR device (12) is established based on the instance switch command.

3. The XR streaming method of claim 2, wherein the instance switch command is generated based on a respective distance between the XR device (12) and the plurality of XR application instances (26), based on a respective transmission delay between the XR device (12) and the plurality of XR application instances (26), and/or based on a respective data transmission rate between the XR device (12) and the plurality of XR application instances (26).

4. The XR streaming method according to any one of the preceding claims, wherein an instance switch invitation command is generated by means of a second XR device or by an XR application instance (26) associated with the second XR device, wherein the instance switch invitation command is transmitted to the first XR application instance and/or to the XR device (12) currently connected with the first XR application instance.

5. The XR streaming method according to claims 2 and 4, wherein the instance switch command is generated based on the instance switch invitation command.

6. The XR streaming method according to any one of the preceding claims, wherein the XR images streamed by means of the second XR application instance are associated with the XR application or with another XR application.

7. The XR streaming method according to any one of the preceding claims, wherein the plurality of XR application instances is implemented on a single server and/or on different servers.

8. The XR streaming method according to any one of the preceding claims, wherein the streaming of the XR images by means of the first XR application instance and the streaming of the XR images by means of the second XR application instance overlap in time.

9. The XR streaming method according to any one of the preceding claims, wherein metadata is transmitted from the first XR application instance to the second XR application instance, wherein the metadata comprises additional information about a current state of the XR application.

10. The XR streaming method according to claim 9, wherein the metadata is transmitted from the first XR application instance to the second XR application instance directly or via the XR device (12).

11. The XR streaming method according to any one of the preceding claims, wherein the first XR application instance employs a first rendering engine, wherein the second XR application instance employs a second rendering engine, and wherein the first rendering engine is different from the second rendering engine.

12. The XR streaming method according to any one of the preceding claims, wherein each XR application instance (26) is associated with at least one user, particularly with a plurality of users.

13. An extended reality (XR) streaming system, comprising a plurality of XR application instances (26), wherein the plurality of XR application instances (26) is connectable with an XR device (12), wherein the XR streaming system (10) is configured to perform an XR streaming method according to any one of the preceding claims.

14. The XR streaming system according to claim 13, wherein the XR streaming system (10) comprises a plurality of servers, wherein the plurality of XR application instances is implemented on the plurality of servers.

15. The XR streaming system according to claim 14, wherein the plurality of servers is interconnected.
